Europäisches Patentamt

European Patent Office

Office européen des brevets

(11) Numéro de publication: **0 102 859**
**B1**

(12) **FASCICULE DE BREVET EUROPEEN**

(19)

(45) Date de publication du fascicule du brevet:
**19.02.86**

(21) Numéro de dépôt: **83401337.7**

(22) Date de dépôt: **29.06.83**

(51) Int. Cl.⁴: **F 16 D 9/00**

(54) **Dispositif de désaccouplage de deux machines tournantes.**

(30) Priorité: **08.07.82 FR 8212321**

(43) Date de publication de la demande:
**14.03.84 Bulletin 84/11**

(45) Mention de la délivrance du brevet:
**19.02.86 Bulletin 86/8**

(84) Etats contractants désignés:
**DE FR GB IT**

(56) Documents cités:
**FR - A - 1 521 603**
**FR - A - 2 094 274**
**FR - A - 2 414 146**
**US - A - 2 964 931**
**US - A - 3 536 174**

(73) Titulaire: **HISPANO-SUIZA Société anonyme dite:,
333, Bureaux de la Colline, F-92213 Saint Cloud (FR)**

(72) Inventeur: **Ville, Daniel, 2, Rue A. de Musset,
F-92360 Meudon la Foret (FR)**
Inventeur: **Virmoux, Michel Roger Charles, 25, Avenue
des Sablons, F-78500 Sartrouville (FR)**

(74) Mandataire: **Moinat, François, S.N.E.C.M.A. Service des
Brevets Boîte Postale 81, F-91003 Evry Cedex (FR)**

## Description

La présente invention concerne un dispositif de désaccouplage de deux machines tournantes. Comme il est connu, suivant les phases de fonctionnement des deux machines tournantes, dans certaines applications, la propagation du mouvement peut se faire soit dans un premier sens, soit dans un sens inverse du premier qui sera dénommé second sens de propagation du mouvement. Un niveau de couple sensiblement différent peut dans ce cas s'exercer dans chaque sens. On supposera par la suite que le premier sens choisi de propagation du mouvement correspond à un niveau de couple plus élevé et le second sens à un niveau de couple plus faible. Ces conditions de fonctionnement, par exemple, se trouvent notamment dans le cas où l'une des machines tournantes est un démarreur de turbomachine et où l'autre machine tournante est le boîtier de prise de mouvement de ladite turbomachine utilisée pour l'entraînement de divers équipements à partir de plusieurs chaînes de transfert du mouvement. Lors du démarrage de la turbomachine, le démarreur entraîne en rotation au moins un corps tournant de la turbomachine par l'intermédiaire du boîtier de prise de mouvement et, dans cette première phase, un couple important est transmis par la ligne d'arbres de transmission. Après mise en route, la turbomachine entraîne en rotation les parties tournantes du boîtier de prise de mouvement et un arbre du démarreur reste entraîné en rotation par sa liaison avec le boîtier de prise de mouvement. Il ne s'exerce dans cette seconde phase qu'un couple nettement plus faible que durant la première phase et seulement nécessaire à l'entraînement de l'arbre du démarreur sans effort antagoniste, dans les conditions normales de fonctionnement.

Ces résultats sont obtenus de manière connue grâce à des moyens de transmission de puissance entre les deux machines tournantes qui sont différents suivant le sens de propagation du mouvement. Par exemple, dans le premier sens de propagation du mouvement où le niveau du couple exercé est plus élevé, cette transmission s'effectue par une liaison à crabots entre un premier et un second arbre. Dans le second sens de propagation du mouvement inverse du premier sens, cette transmission s'effectue grâce à un arbre intermédiaire dont chaque extrémité respectivement placée à l'intérieur d'un alésage du premier arbre et d'un alésage du second arbre est solidarisée respectivement avec chacun des premier et second arbres, par exemple, par une goupille d'entraînement. Dans les deux phases de fonctionnement qui se présentent suivant le sens de propagation du mouvement correspondant à des niveaux de couple d'un ordre de grandeur différent, il est nécessaire, afin d'éviter des endommagements importants ou des détériorations successives de pièces en cascade, de protéger les machines tournantes dans l'éventualité de l'apparition accidentelle dans la ligne de transmission de puissance d'un surcouple qui peut être dû à des causes d'origines diverses qu'il n'est pas possible de maîtriser entièrement par suite des conditions de fonctionnement imposées aux machines.

Le brevet français N° 1521603 décrit plusieurs modes de réalisation de dispositifs limiteurs de couple utilisés dans une chaîne cinématique de moteur comportant plusieurs transferts de mouvements. Un limiteur de couple différent constitué par une éprouvette creuse présentant une section calibrée de moindre résistance est intégré dans chaque chaîne de transfert de mouvement. Cette disposition connue permet de protéger plusieurs équipements différents auxquels le mouvement est transmis par une chaîne différente avec limitation du couple à un niveau différent suivant chaque chaîne. Toutefois, la solution proposée ne permet pas de protéger deux machines tournantes entre lesquelles la propagation du mouvement peut se faire dans les deux sens avec un niveau de couple très différent dans chaque sens.

Le brevet FR-A N° 2094274 concerne un limiteur de couple bi-directionnel dans lequel une liaison préchargée par un ressort est établie entre les éléments menant et mené et dans lequel un organe participant à la transmission est adapté pour se déplacer à l'encontre de l'action du ressort en cas de surcouple pour venir en prise avec un élément fixe. Le mode de réalisation décrit fait appel à deux systèmes à billes pour la transmission et cette solution se révèle inadaptée pour certaines utilisations et des niveaux de couple visés par l'invention et il en est de même pour le réglage à des valeurs de couple différentes qui est proposé par le brevet cité en donnant une forme appropriée aux logements des billes.

Le brevet US-A N° 2964931 décrit un dispositif de désaccouplage dans lequel un arbre comporte une section réduite constituant un premier limiteur de couple, cet arbre est accouplé à un autre arbre par une liaison à crabots s'engageant dans un sens de rotation et se dégageant dans l'autre sens et un arbre de liaison intermédiaire comporte également une section réduite constituant un second limiteur de couple. La solution proposée par ce brevet permet un désaccouplage en cas de rupture provoquée par des efforts de torsion mais ne permet pas un désaccouplage provoqué par des flexions alternées créées par des efforts radiaux s'exerçant sur les arbres.

L'invention, par contre, évite ces inconvénients des solutions antérieurement connues et donne en outre des possibilités d'applications intéressantes notamment dans le domaine aéronautique, comme cela a été noté ci-dessus et où les machines tournantes atteignent de très grandes vitesses de rotation, par exemple de l'ordre de 20 000 tr/min.

Un dispositif de désaccouplage de deux machines tournantes du type précité conforme à l'invention est caractérisé en ce que les faces inclinées des crabots présentent un jeu de telle sorte qu'un désaccouplage peut être obtenu à la suite de flexions alternées résultant d'efforts radiaux s'exerçant sur les arbres et qu'en cas de rupture de la seconde gorge fusible de l'arbre intermédiaire, le second arbre ainsi que la partie de l'arbre intermédiaire qui reste solidaire du second arbre sont déplacés suivant une direction axiale dans le sens d'un écartement du premier arbre ainsi que de la partie de l'arbre intermédiaire qui reste solidaire du premier arbre et en ce que les moyens de blocage en translation axiale du second arbre après rupture de la seconde gorge fusible consistent en une gorge située dans l'alésage d'une seconde partie du second arbre liée par des cannelures à la première partie du second arbre qui coopère avec le premier arbre et des billes placées à l'extrémité de la première partie du second arbre voisine de ladite gorge, un ressort radial monté à l'intérieur de ladite extrémité par l'intermédiaire d'un bouchon cylindrique et exerçant sur lesdites billes un effort centrifuge de telle sorte que, en cas de déplacement axial de la première partie du second arbre, les billes viennent se placer dans ladite gorge et sont maintenues dans le fond de cette gorge à la fois par l'action du ressort radial et par l'action de la force centrifuge créée par la rotation du second arbre, bloquant ainsi en translation axiale la première partie du second arbre dans une position où ce second arbre est maintenu axialement écarté du premier arbre sans engagement mutuel des crabots du premier arbre et du second arbre.

D'autres caractéristiques et avantages de l'invention seront mieux compris à la lecture de la description qui va suivre d'un mode de réalisation de l'invention et en se référant aux dessins annexés sur lesquels:

— la fig. 1 est une vue en coupe longitudinale d'un dispositif de désaccouplage de deux machines tournantes selon l'invention, représenté dans le cas d'un fonctionnement normal,

— la fig. 2 est une vue partielle développée montrant un détail repéré par un cercle II sur la fig. 1, concernant le moyen de transmission de puissance entre les deux machines tournantes par une liaison à crabots,

— la fig. 3 est une vue analogue à la fig. 1 montrant le dispositif de désaccouplage selon l'invention, représenté après action d'un premier limiteur de couple dans le cas de fonctionnement dans un premier sens de propagation du mouvement,

— la fig. 4 est une vue analogue aux fig. 1 et 3 montrant le dispositif de désaccouplage selon l'invention, représenté après action d'un second limiteur de couple dans le cas de fonctionnement dans un second sens de propagation du mouvement inverse du premier,

— la fig. 5 est une vue analogue à la fig. 2 et est une vue partielle développée montrant un détail repéré par un cercle V sur la fig. 4, concernant la liaison à crabots.

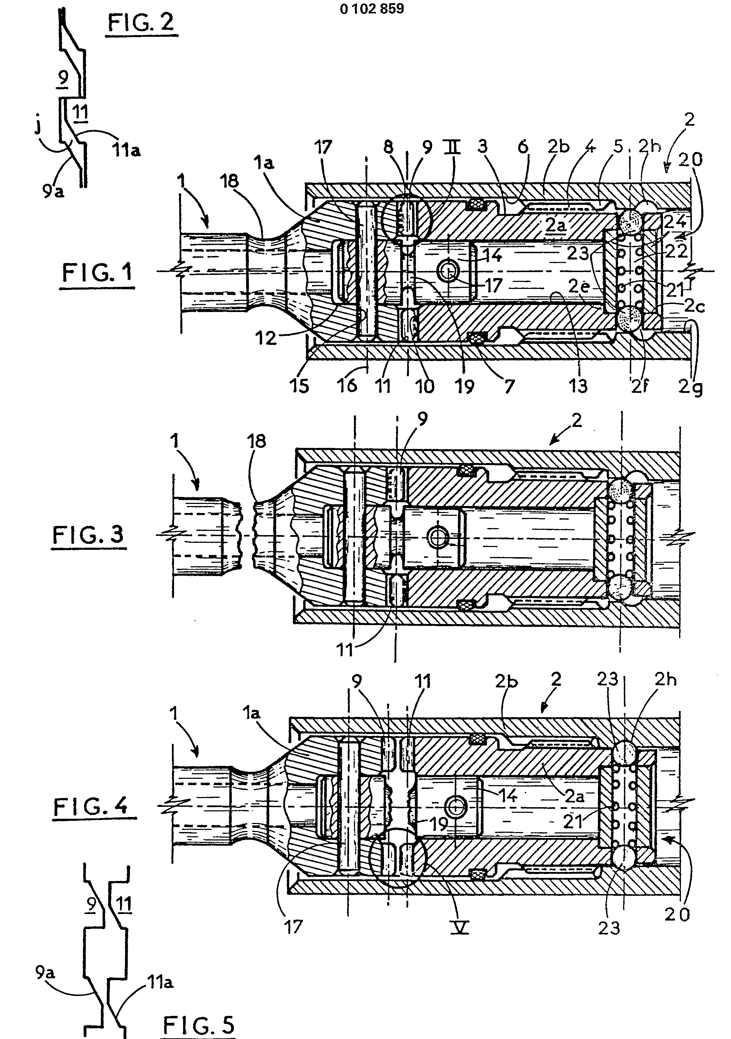

A la fig. 1 on a représenté en coupe longitudinale un dispositif de désaccouplage conforme à l'invention. Les deux machines tournantes entre lesquelles ce dispositif forme la liaison n'ont pas été représentées aux dessins et ne seront pas décrites plus en détail. Un premier arbre rotatif 1 fait partie de l'une de ces machines tournantes et est monté sur un palier à roulement non représenté aux dessins convenablement choisi et dimensionné. Un second arbre rotatif 2 coaxial au premier arbre 1 forme la liaison entre le premier arbre 1 de l'une des machines tournantes et l'autre machine tournante. Ce second arbre 2 comporte deux parties 2a et 2b. La première partie 2a comporte sur son diamètre externe 3 une série annulaire de cannelures longitudinales 4 qui sont en prise avec une autre série annulaire de cannelures longitudinales 5 disposées dans l'alésage 6 de la seconde partie 2b du second arbre 2, cette première partie 2a étant placée à l'intérieur de l'alésage 6 de cette seconde partie 2b. L'extrémité 1a du premier arbre 1 vient également se placer à l'extrémité de l'alésage 6 de la seconde partie 2b du second arbre 2, à l'intérieur de cet alésage 6. Entre les faces en regard des deux parties du second arbre 2 est placé dans une zone ne comportant pas les cannelures 4 et 5 un joint torique d'étanchéité 7 du type connu. De manière analogue à ce qui est réalisé pour le premier arbre 1, le second arbre 2 et plus précisément la seconde partie 2b du second arbre 2 est montée sur un palier à roulement non représenté aux dessins convenablement choisi et dimensionné. Le premier arbre 1 est entraîné en rotation avec le mouvement de l'une des machines tournantes et le second arbre 2 est entraîné en rotation avec le mouvement de l'autre des machines tournantes. La face radiale 8 de l'extrémité 1a du premier arbre 1 comporte une série de crabots 9. De manière similaire, la face radiale 10 de l'extrémité de la première partie 2a du second arbre 2 qui se trouve en regard de l'extrémité 1a du premier arbre 1 comporte une série de crabots 11 dont la forme et les dimensions sont déterminées de manière à les rendre susceptibles de coopérer avec les crabots du premier arbre 1, comme cela est plus clairement représenté à la fig. 2. Les crabots 9 ont une face inclinée 9a et les crabots 11 ont une face inclinée 11a. L'extrémité 1a du premier arbre 1 comporte un alésage 12 et l'extrémité en regard de la première partie 2a du second arbre 2 comporte également un alésage 13 de même diamètre que l'alésage 12. Dans ces alésages 12 et 13 et pour moitié de sa longueur dans chacun est placé un arbre intermédiaire 14 coaxial aux premier et second arbres 1 et 2 comportant dans chaque moitié au moins un trou 15 traversant l'arbre intermédiaire 14 et dont l'axe 16 est perpendiculaire à l'axe commun aux trois arbres 1, 2 et 14. En regard des trous 15, un trou coaxial et de même diamètre est également percé dans le premier arbre 1 et dans la première partie 2a du second arbre 2. Des goupilles 17 de liaison et d'entraînement sont placées dans les trous 15 et elles sont de longueur légèrement inférieure au diamètre externe de l'extrémité 1a du premier arbre 1 et à celui de l'extrémité de la première partie 2a du second arbre 2. Entre l'extrémité 1a du premier arbre 1 et le reste de l'arbre 1 est placée une section de moindre résistance obtenue par une gorge 18 pratiquée sur le diamètre externe de l'arbre 1, dite gorge fusible. De manière similaire, entre les deux moitiés de l'arbre intermédiaire 14 placées respectivement à l'intérieur du premier arbre 1 et du second arbre 2 est placée une section de moindre résistance obtenue par une gorge 19 pratiquée sur le diamètre externe de l'arbre intermédiaire 14 et dite gorge fusible.

L'extrémité de la première partie 2a du second arbre 2 opposée à celle qui comporte les crabots 11 comporte un alésage 2c de diamètre supérieur à celui de l'alésage 13 du reste de cette partie 2a de manière à créer un épaulement 2e. Cet alésage 2c comporte un trou diamétral 2f débouchant de chaque côté sur le diamètre extérieur de la partie 2a de l'arbre 2 et formant ainsi deux logements en coopération avec le diamètre interne de l'alésage 2g de la seconde partie 2b du second arbre 2. Dans la même zone, cet alésage 2g comporte également une gorge annulaire 2h. A cette extrémité de la première partie 2a du second arbre 2 est monté dans l'alésage 2c un élément de blocage 20 coaxial aux arbres 1, 2 et 14. Cet élément 20 comporte un ressort radial 21 placé dans un trou diamétral 22 d'un bouchon cylindrique 24 qui vient en appui sur l'épaulement 2e à l'intérieur de l'alésage 2c de l'extrémité de la partie d'arbre 2a. L'élément 20 est complété par deux billes 23 qui sont en appui sur le ressort 21 dans le trou 22 et viennent se loger, chacune à une extrémité du trou 2f de la partie d'arbre 2a.

On va décrire brièvement le fonctionnement du dispositif dont la structure vient d'être décrite afin de mieux faire ressortir certains avantages de l'invention. Le fonctionnement normal est représenté aux fig. 1 et 2. Deux phases de fonctionnement sont possibles. Dans une première phase, le premier arbre 1 est menant et le second arbre 2 est mené. La transmission de puissance dans ce premier sens de propagation du mouvement s'effectue par la liaison à crabots 9 et 11 entre l'arbre menant 1 et l'arbre mené 2. Dans une application où le premier arbre 1 est l'arbre du démarreur d'une turbomachine et où le second arbre 2 constitue l'arbre de liaison au boîtier de prise de mouvement de la turbomachine, cette première phase qui vient d'être décrite intervient lors du démarrage de la turbomachine et durant cette première phase un couple important est transmis par la ligne d'arbres de transmission. Dans une seconde phase, le premier arbre 1 est mené et le second arbre 2 est menant. Par suite d'un jeu j prévu entre les faces inclinées 9a et 11a des crabots 9 et 11, la transmission de puissance dans ce second sens de propagation du mouvement inverse du premier s'effectue par la liaison entre l'arbre menant 2 et l'arbre mené 1 par l'arbre intermédiaire 14 et les goupilles 17. Dans l'application envisagée ci-dessus cette seconde phase qui vient d'être décrite intervient après l'arrêt du démarreur en phase de fonctionnement de la turbomachine et durant cette seconde phase un couple nettement plus faible que durant la première phase et seulement dû à l'effort d'entraînement de l'arbre du démarreur tournant à vide sans effort antagoniste est transmis par la ligne d'arbres de transmission.

Des incidents de fonctionnement dus à des causes d'origines diverses qu'il n'est pas toujours possible de maîtriser entièrement peuvent apparaître dans l'une comme dans l'autre phase. Ces incidents peuvent ainsi apparaître dans l'application envisagée ci-dessus lors du démarrage de la turbomachine et conduire en particulier au développement d'un surcouple accidentel dans la ligne d'arbres de transmission. Il est important de limiter la transmission de puissance à une valeur déterminée du couple maximal autorisé dans cette première phase de fonctionnement. Cette valeur limite du couple pourra par exemple dans certains cas être de l'ordre de 100 m daN. Si cette valeur était dépassée, la gorge fusible 18 du premier arbre 1 est cisaillée et on obtient la configuration représentée à la fig. 3. Tous les éléments du dispositif selon l'invention demeurent inchangés à l'exception du premier arbre 1 sur lequel la gorge fusible 18 est cisaillée. La panne apparaît immédiatement car en cours de phase de démarrage, l'arrêt total de la turbomachine se produit. Toute détérioration ou dommage plus important est ainsi évité.

Dans le seconde phase de fonctionnement d'autres incidents de nature et d'origine différentes peuvent également survenir. Ainsi des incidents survenant sur le démarreur peuvent engendrer des forces de balourd ou provoquer des effets de choc par suite de frottements, par exemple. Ces effets tout en développant des efforts antagonistes et en sollicitant un couple dans la ligne d'arbres plus fort que durant une seconde phase de fonctionnement dans des conditions normales seraient susceptibles d'induire des réactions dommageables en direction de la turbomachine et en particulier dans le boîtier de prise de mouvement. Il est donc important aussi de les éviter. Dans cette seconde phase de fonctionnement une valeur limite de couple admissible de 3 m daN pourra par exemple être retenue dans certains cas. Lorsque cette valeur est dépassée, la gorge fusible 19 est cisaillée et on obtient la configuration représentée aux fig. 4 et 5. Si des efforts de flexion développés dans la ligne d'arbres de transmission par suite d'incidents survenant au démarreur durant cette seconde phase de fonctionnement dépassent également une valeur limite déterminée, la gorge fusible 19 est rompue et on obtient de la même manière la configuration représentée aux fig. 4 et 5. Après rupture de la gorge fusible 19, les faces inclinées 9a et 11a des crabots 9 et 11 permettent le dégagement des faces radiales d'extrémité des arbres 1 et 2a, comme cela est représenté aux fig. 4 et 5. De plus, il est important après rupture de la gorge fusible 19 d'éviter des contacts entre les arbres 1 et 2a. Entre la position en fonctionnement normal représentée à la fig. 1 et la position après rupture de la gorge fusible 19 représentée à la fig. 4, la première partie 2a du second arbre s'est écartée suivant une direction axiale du premier arbre 1. De cette façon, les billes 23 viennent se placer dans la gorge 2h de l'alésage de la seconde partie 2b du second arbre 2. Les billes 23 sont maintenues dans le fond de cette gorge 2h à la fois par l'action du ressort radial 21 et par l'effet des forces centrifuges. Après rupture de la gorge fusible 19, dans cette seconde phase de fonctionnement, le premier arbre 1 cesse d'être entraîné en rotation et le second arbre 2 continue à être entraîné en rotation par sa liaison au boîtier de prise de mouvement de la turbomachine. L'arrêt en rotation du premier arbre 1 peut également être utilisé dans ce cas pour une détection faisant appel à des moyens appropriés connus. Cette disposition complémentaire permet d'éviter une tentative ultérieure de remise en marche du démarreur sans avoir remédié au préalable aux défauts qui ont entraîné la rupture de la gorge fusible 19, ce qui évite des endommagements supplémentaires. Dans l'application envisagée, un incident sur le démarreur dans cette seconde phase de fonctionnement ne doit pas ainsi avoir d'autre répercussion sur le fonctionnement de la turbomachine ni occasionner de détérioration de pièces ou autre dommage. Le dispositif selon l'invention permet d'obtenir ces résultats et la première partie 2a du second arbre 2 ainsi que la partie de l'arbre intermédiaire 14 qui lui reste lié après rupture de la gorge fusible 19 sont maintenues axialement dans l'alésage de la seconde partie 2b du second arbre 2 et les contacts sont évités entre le premier arbre 1 et en partie 2a du second arbre 2.

## Revendications

1. Dispositif de désaccouplage de deux machines tournantes entre lesquelles la transmission de puissance s'effectue, d'une part, dans un premier sens de propagation du mouvement, par une liaison à crabots (9, 11) entre un premier (1) et un second arbre (2) et, d'autre part, dans le sens inverse du premier dit second sens grâce à un arbre intermédiaire (14) dont chaque extrémité respectivement placée à l'intérieur d'un alésage (12) du premier arbre (1) et d'un alésage (13) du second arbre (2) est solidarisée respectivement avec chacun des premier (1) et second arbres (2), par exemple, par une goupille d'entraînement (17), un niveau de couple plus élevé s'exerçant dans le premier sens, le premier arbre (1) comportant une première section calibrée (18) de moindre résistance dite gorge fusible constituant un premier limiteur de couple plus élevé actif dans le premier sens de propagation du mouvement et l'arbre intermédiaire (14) comportant une seconde section calibrée (19) de moindre résistance de même type gorge fusible et constituant un second limiteur du couple plus faible actif dans le sens inverse du premier de propagation du mouvement, et le dispositif comportant des moyens propres à éviter tout contact, en cas de rupture de la seconde gorge fusible (19) de l'arbre intermédiaire (14), entre le second arbre (2) menant et le premier arbre (1) mené et entre les deux parties rompues de l'arbre intermédiaire (14) par blocage en translation axiale du second arbre (2), caractérisé en ce que les faces inclinées (9a, 11a) des crabots (9, 11) présentent un jeu de telle sorte qu'un désaccouplage peut être obtenu à la suite de flexions alternées résultant d'efforts radiaux s'exerçant sur les arbres (1, 2) et qu'en cas de rupture de la seconde gorge fusible (19) de l'arbre intermédiaire (14), le second arbre (2) ainsi que la partie de l'arbre intermédiaire (14) qui reste solidaire du second arbre (2) sont déplacés suivant une direction axiale dans le sens d'un écartement du premier arbre (1) ainsi que la partie de l'arbre intermédiaire (14) qui reste solidaire du premier arbre (1) et en ce que les moyens de blocage (20) en translation axiale du second arbre (2) après rupture de la seconde gorge fusible (19) consistent en une gorge (2h) située dans l'alésage d'une seconde partie (2b) du second arbre (2) liée par des cannelures (4, 5) à la première partie (2a) du second arbre (2) qui coopère avec le premier arbre (1) et des billes (23) placées à l'extrémité de la première partie (2a) du second arbre (2) voisine de ladite gorge (2h), un ressort radial (21) monté à l'intérieur de ladite extrémité par l'intermédiaire d'un bouchon cylindrique (24) et exerçant sur lesdites billes (23) un effort centrifuge de telle sorte que, en cas de déplacement axial de la première partie (2a) du second arbre (2), les billes (23) viennent se placer dans ladite gorge (2h) et sont maintenues dans le fond de cette gorge (2h) à la fois par l'action du ressort radial (21) et par l'action de la force centrifuge créée par la rotation du second arbre (2), bloquant ainsi en translation axiale la première partie (2a) du second arbre (2) dans une position où ce second arbre (2) est maintenu axialement écarté du premier arbre (1) sans engagement mutuel des crabots (9, 11) du premier arbre (1) et du second arbre (2).

2. Dispositif de désaccouplage selon la revendication 1, caractérisé en ce que les valeurs mesurant les grandeurs du couple différent suivant le sens de propagation du mouvement sont dans un rapport compris entre 1 à 5 et 1 à 500.

## Patentansprüche

1. Vorrichtung zum Trennen zweier rotierender Maschinen, zwischen denen eine Leistungsübertragung zwischen einer ersten Welle (1) und einer zweite Welle (2) einerseits in einer ersten Bewegungsübertragungsrichtung über eine Klauenkupplung (9, 11) und andererseits in einer zweiten, zur ersten Bewegungsübertragungsrichtung entgegengesetzten Richtung über eine Zwischenwelle (14) stattfindet, deren Enden sich im Innern einer Bohrung (12) der ersten Welle (1) bzw. einer Bohrung (13) der zweiten Welle (2) befinden und die sowohl mit der ersten (1) auch auch mit der zweiten Welle (2) z.B. über Mitnehmerstifte (17) fest verbunden ist, wobei in der ersten Richtung ein höheres Drehmoment zu übertragen ist,

mit einem in der ersten Welle (1) ausgebildeten, eine Sicherungskehle darstellenden ersten kalibrierten Abschnitt (18) verringerter Widerstandsfähigkeit, der einen ersten Begrenzer für das höchste aktive Drehmoment in der ersten Bewegungsübertragungsrichtung bildet,

mit einem in der Zwischenwelle (14) ausgebildeten, eine Sicherungskehle darstellenden zweiten kalibrierten Abschnitt (19) verringerter Widerstandsfähigkeit, der einen zweiten Begrenzer für das in der zu der ersten Bewegungsübertragungsrichtung entgegengesetzten Richtung zu übertragende kleinere Drehmoment bildet,

sowie mit Mitteln (20), die im Fall eines Bruchs der zweiten Sicherungskehle (19) der Zwischenwelle (14) jeden Kontakt zwischen der führenden zweiten Welle (2) und der geführten ersten Welle (1) und zwischen den beiden Bruchstücken der Zwischenwelle (14) dadurch verhindern, dass sie die zweite Welle (2) gegen eine axiale Translation blockieren,

dadurch gekennzeichnet,

dass die geneigten Flächen (9a, 11a) der Klauen (9, 11) der genannten Klauenkupplung ein solches Spiel besitzen, dass sie beim Auftreten von Biegungsbelastungen aufgrund von auf die Wellen (1, 2) einwirkenden wechselnden Radialkräften auskuppelbar sind und dass im Fall eines Bruchs der zweiten Sicherungskehle (19) der Zwischenwelle (14) sowohl die zweite Welle (2) als auch der mit ihr fest verbunden bleibende Teil der Zwischenwelle (14) radial in eine Richtung verschoben werden, in der sie sich von der ersten Welle (1) bzw. dem fest mit ihr verbunden bleibenden Teil der Zwischenwelle (14) entfernen,

und dass die genannten Mittel (20), durch die die zweite Welle (2) nach dem Bruch der zweiten Sicherungskehle (19) gegen eine axiale Translation blockierbar ist, folgende Teile umfassen:
— eine Kehle (2h), die in der Bohrung eines zweiten Teils (2b) der zweiten Welle (2) angeordnet ist, der über Nuten (4, 5) mit dem der ersten Welle (1) zusammenwirkenden ersten Teil (2a) der zweiten Welle (2) verbunden ist,
— Kugeln (23), die im Endbereich des ersten Teils (2a) der zweiten Welle (2) in der Nähe der genannten Kehle (2h) angeordnet sind,
— sowie eine radiale Feder (21), die mit Hilfe eines zylindrischen Pfropfens (24) im Innern des genannten Endbereichs montiert ist und auf die Kugeln (23) einen in zentrifugaler Richtung wirkenden Druck ausübt, derart dass diese Kugeln (23) bei einer axialen Verschiebung des ersten Teils (2a) der zweiten Welle (2) in die genannte Kehle (2h) eindringen und sowohl durch die Wirkung der radialen Feder (21) als auch durch die Wirkung der aufgrund der Rotation der zweiten Welle (2) erzeugten Zentrifugalkraft gehalten werden, wobei sie den ersten Teil (2a) der zweiten Welle (2) in einer Position gegen axiale Translation blockieren, in der die zweite Welle (2) axial von der ersten Welle (1) beabstandet ist und die Klauen (9, 11) der ersten Welle (1) und der zweiten Welle (2) keinen gegenseitigen Eingriff haben.

2. Vorrichtung nach Anspruch 1, dadurch gekennzeichnet, dass das Grössenverhältnis der in den beiden entgegengesetzten Bewegungsübertragungsrichtungen unterschiedlichen Drehmomente zwischen 1:5 und 1:500 liegt.

## Claims

1. Device for disconnecting two rotary machines between which power transmission is effected, on the one hand in a first drive direction, by means of a dog clutch (9, 11) between a first (1) and a second direction, the reverse of the first direction, by means of an intermediate shaft (14) the ends of which, placed respectively inside a bore (12) of the first shaft (1) and a bore (13) of the second shaft, are made solid respectively with the first (1) and the second (2) shaft, for the example by means of a drive pin (17), a higher torque level being exerted in the first direction, the first shaft (1) comprising a first calibrated section (18) of reduced strength, termed a shear neck, constituting a first, higher torque limiter operative in the first drive direction, and the intermediate shaft (14) comprising a second calibrated section (19) of reduced strength of the same shear neck type and constituting a second, lower torque limiter operative in the direction the reverse of the first drive direction, and the device comprising means adapted to prevent any contact, in the event of the second shear neck (19) of the intermediate shaft (14) breaking, between the second, driving, shaft (2) and the first, driven, shaft (1) and between the two broken parts of the intermediate shaft (14) by restraining the second shaft (2) against axial motion, characterised in that the inclined faces (9a, 11a) of the dogs (9, 11) are provided with clearance such that disconnection can be obtained as a result of alternate bendings resulting from radial stresses exerted on the shafts (1, 2) and in that, in the event of the fracture of the second shear neck (19) of the intermediate shaft (14), the second shaft (2) as well as the part of the intermediate shaft (14) which remains solid with the second shaft (2) are moved axially away from the first shaft (1) and from the part of the intermediate shaft (14) which remains solid with the first shaft (1), and in that the means restraining the second shaft (2) against axial translation after the fracture of the second shear neck (19) consist in a groove (2h) in the bore of a second part (2b) of the second shaft (2) coupled through splines (4, 5) to the first part (2a) of the second shaft (2) which co-operates with the first shaft (1) and balls (23) located at the end of the first part (2a) of the second shaft (2) adjacent said groove (2h), a radial spring (21) mounted inside said end by means of a cylindrical plug (24) and exerting on said balls (23) a radially outward force such that in the event of axial displacement of the first part (2a) of the second shaft (2), the balls (23) locate themselves in said groove (2h) and are held in the trough of said groove (2h) both by the action of the radial spring (21) and by the action of the centrifugal force produced by the rotation of the second shaft (2), thus restraining against axial motion the first part (2a) of the second shaft (2) in a position at which said second shaft (2) is held axially away from the first shaft (1) without mutual engagement of the dogs (9, 11) of the first shaft (1) and of the second shaft (2).

2. Disconnecting device according to Claim 1, characterised in that the values of the sizes of torque differing according to the drive direction are in a ratio of between 1:5 and 1:500.

FIG. 2

FIG. 1

FIG. 3

FIG. 4

FIG. 5

0 102 859

7